# EUROPEAN PATENT SPECIFICATION

(11) **EP 3 081 589 B1**
(45) Date of publication and mention of the grant of the patent: **08.09.2021**
(21) Application number: 14870297.0
(22) Date of filing: 10.11.2014
(51) Int. Cl.: C08L 23/00, B05D 7/02, C08K 5/134, C08K 5/3435, C08K 5/527

(54) **BASE TO BE COATED HAVING IMPROVED COATING PROPERTIES**
BESCHICHTUNGSBASISSTOFF MIT VERBESSERTEN BESCHICHTUNGSEIGENSCHAFTEN
BASE DESTINÉE À RECEVOIR UN REVÊTEMENT PRÉSENTANT DES PROPRIÉTÉS DE REVÊTEMENT AMÉLIORÉES

(30) Priority: 09.12.2013 JP 2013253872
(43) Date of publication of application: 19.10.2016
(73) Proprietor: Adeka Corporation, Tokyo 116-8554 (JP)
(72) Inventor: KAWAMOTO, Naoshi, Saitama-shi Saitama 336-0022 (JP); HORIKOSHI, Takahiro, Saitama-shi Saitama 336-0022 (JP); IWASAKI, Yusuke, Saitama-shi Saitama 336-0022 (JP); SEGUCHI, Tetsuya, Saitama-shi Saitama 336-0022 (JP)
(74) Representative: Forstmeyer, Dietmar
(86) International application number: PCT/JP2014/079719
(87) International publication number: WO 2015/087646

(56) References cited:
- EP-A1- 0 953 602
- EP-A1- 2 949 697
- WO-A1-02/46502
- WO-A1-2013/114652
- WO-A1-2014/115385
- JP-A- H10 182 902
- JP-A- 2004 323 763
- JP-A- 2005 162 867
- JP-A- 2011 213 808
- None

## Description

### TECHNICAL FIELD

This disclosure relates to a substrate to be coated made of a polyolefin resin composition having incorporated therein a hindered amine compound and a specific compound, particularly a substrate excellent in weatherability and coating adhesion and specially suited as an automotive interior and exterior material.

### BACKGROUND ART

Coating a substrate is practiced for the purpose of enhancing aesthetic appearance, improving durability, and imparting surface characteristics. Adhesion of a coating composition to a substrate is largely influenced by the surface free energy (polarity) of the substrate. In coating a polyolefin base substrate having a low surface free energy, such as polyethylene or polypropylene, it has been difficult to obtain sufficient adhesion unless any surface treatment is applied to the substrate.

Methods for enhancing adhesion of a coating to a substrate include surface modification such as sanding or flame/corona treatment, modification of coating materials by the addition of an adhesive resin or an external additive, and application of a primer such as an epoxy resin or a phenol resin between the substrate and a coating film.

The surface modification by sanding or flame/corona treatment is to damage the substrate surface and can cause unintentional reduction of physical properties. Furthermore, surface modification of large members, such as automotive exterior parts, requires large investment in equipment to economical disadvantage.

Additives for increasing the coating adhesion are preferably those having a group exerting strong interaction with a substrate and a group bondable to a coating material. Because automotive materials contain pigments, such as carbon black, and antioxidants, such as hindered phenol-base, phosphorus-base, thioether-base, and lactone-base antioxidants, according to necessity with a view to imparting aesthetic quality and weatherability, the additive to be used to increase the coating adhesion should be selected so as not to impair the functions of these additives. It is difficult, however, to examine all the influences on the other additives. Additionally, use of so selected additive for increasing the coating adhesion directly leads to an increase in cost to economical disadvantage.

Applying a primer of a resin having an anchor effect on both the substrate and the coating is another method for enhancing coating adhesion. Examples of resins used as a primer include acryl-modified chlorinated polypropylenes, epoxy resins, and low-molecular elastomers.

It has been a practice in the art to incorporate a hindered amine compound, an ultraviolet absorber, or a like light stabilizer into plastic products that are to be exposed to strong outdoor UV light or high-temperature environments in summer, such as automotive materials. Moldings containing pigments such as carbon black are often used in automobiles. Because such moldings are liable to deteriorate by heat or light absorption, there has been a demand for stabilization systems capable of imparting more excellent stabilization effects.

Patent Document 1 below discloses a resin composition containing a combination of a hindered amine compound and a benzoate compound. Patent Document 2 proposes a combined use of a hindered amine compound and a benzotriazole compound to provide a preferred resin composition.

Patent Document 3 proposes using a benzotriazole UV absorber as a stabilizer for automotive coatings.

Patent Documents 4 and 5 teach a method for preventing discoloration of a coated bumper by specifying the amounts and kinds of an antioxidant and a light stabilizer.

Patent Document 6 discloses a method in which four specific antioxidants and, if necessary, a benzoate light stabilizer and a hindered amine light stabilizer are added to a polypropylene resin composition comprising a specific propylene-ethylene block copolymer, an elastomer, and an inorganic filler.

### CITATION LIST

### Patent Documents:

Patent Document 1: JP 2005-54105A
Patent Document 2: US 4681905
Patent Document 3: CA 2220269
Patent Document 4: JP 6-107897A
Patent Document 5: JP 7-179719A
Patent Document 6: JP 2003-29270A

EP 0953602 A1 discloses a propylene-based resin composition, which exhibits excellent moldability, and an interior member for automobiles molded from said resin composition.

JP H10-182902 A discloses a polypropylene composition and syringe components molded from said resin composition.

WO 02/46502 A1 discloses polyolefin fibers with high tenacity, consisting essentially of predominantly isotactic propylene polymers with particular characteristics and certain additives, processes for preparing the fibers and uses thereof.

WO 2014/115385 A1 discloses a resin composition having excellent weather resistance, a method for its preparation and devices composed of said said resin composition.

### SUMMARY OF THE INVENTION

### Problem to be Solved by the Invention:

Patent Documents 1 to 6 listed above have no mention of coating adhesion and, in fact, the adhesion of a coating applied on the resin compositions disclosed therein is not sufficient. In particular, automotive interior materials usually contain an elastomer and a filler, such as talc, in order to exhibit shock absorbing performance, high rigidity, and aesthetic effect at the risk of reduction in adhesion to a coating. Another problem with these conventional techniques resides in that a hindered amine compound or a UV absorber, if added to a polyolefin resin in an increased amount with a view to improving weatherability, can bleed out due to their poor compatibility with the polyolefin resin, which can result in poor coatability.

Bleeding may be reduced by, for example, overcoating with a resin, such as an acryl/melamine overcoat, a two-part urethane overcoat, a polyester melamine overcoat, or a polyester urethane overcoat. However, in the case of a coating having a highly bright color (with an L value of 60 or higher), it is susceptible to discoloration under a natural environment even when overcoated. A further improvement has thus been demanded.

### Means for Solving the Problem:

The inventors have conducted intensive investigations with the view of solving the above problems. They have found as a result that the problems are solved by incorporating a specific compound into a polyolefin resin composition containing a hindered amine compound. The present invention has been accomplished based on this finding.

The invention provides an use of an aromatic phosphoric ester metal salt represented by general formula (1): 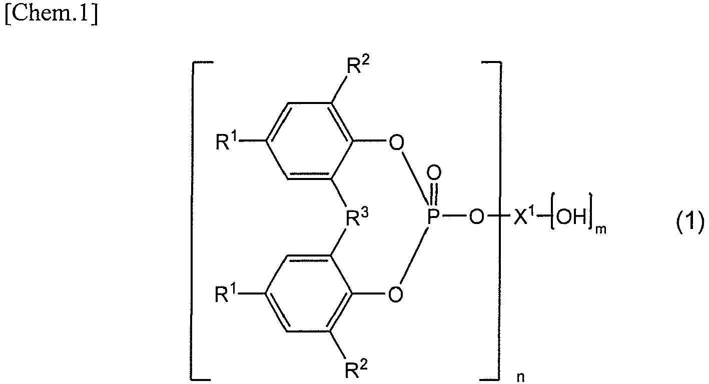 wherein R¹ represents a hydrogen atom or an alkyl group having 1 to 8 carbon atoms; R² represents an alkyl group having 1 to 8 carbon atoms; R³ represents an alkylidene group having 1 to 4 carbon atoms; X¹ represents an alkali metal atom, an alkaline earth metal atom, a zinc atom, or an aluminum atom; n is 1, and m is 0 when X¹ is an alkali metal atom; n is 2, and m is 0 when X¹ is an alkaline earth metal atom or a zinc atom; and n is 1 or 2, and m is 3 - n when X¹ is an aluminum atom, as a coating adhesion promoter in a polyolefin resin composition stabilized with a hindered amine compound to be molded into a substrate.

In a preferred embodiment of the invention, the hindered amine compound includes a compound represented by general formula (2): 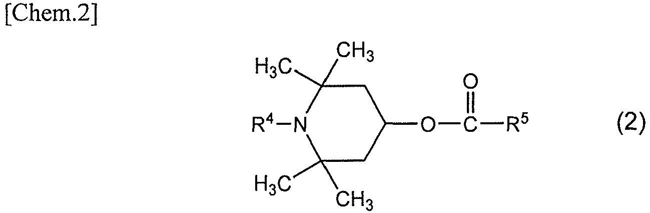 wherein R⁴ represents a hydrogen atom, a hydroxyl group, an alkyl group, a hydroxyalkyl group, an alkoxy group, a hydroxyalkoxy group, or an oxy radical, the alkyl, hydroxyalkyl, alkoxy, and hydroxyalkoxy groups having 1 to 30 carbon atoms; and R⁵ represents an alkyl group having 7 to 31 carbon atoms, an alkenyl group having 2 to 31 carbon atoms, or a substituent represented by general formula (3): 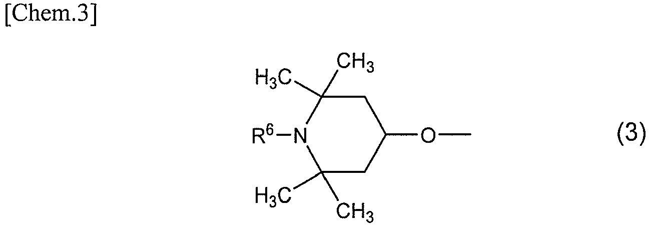 wherein R⁶ has the same meaning as R⁴ in general formula (2).

In another preferred embodiment of the invention, the substrate contains (d) 0.02 to 0.5 parts by mass of a benzoate light stabilizer represented by general formula (4): 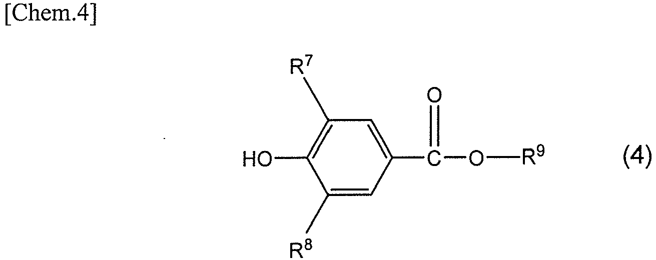 wherein R⁷ and R⁸ each independently represent a hydrogen atom, an alkyl group having 1 to 12 carbon atoms, or an arylalkyl group having 7 to 30 carbon atoms; and R⁹ represents an alkyl group having 8 to 30 carbon atoms.

The invention also provides the use of an aromatic phosphoric ester metal salt represented by general formula (1) for the preparation of a polyolefin resin composition stabilized with a hindered amine compound to be molded into a substrate having improved adhesion to a coating. 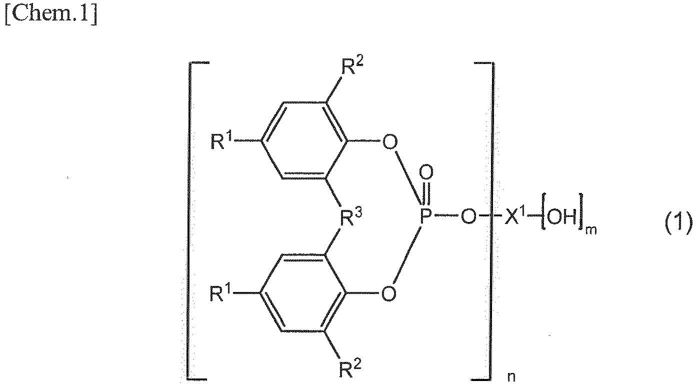 wherein R¹ represents a hydrogen atom or an alkyl group having 1 to 8 carbon atoms; R² represents an alkyl group having 1 to 8 carbon atoms; R³ represents an alkylidene group having 1 to 4 carbon atoms; X¹ represents an alkali metal atom, an alkaline earth metal atom, a zinc atom, or an aluminum atom; n is 1, and m is 0 when X¹ is an alkali metal atom; n is 2, and m is 0 when X¹ is an alkaline earth metal atom or a zinc atom; and n is 1 or 2, and m is 3 - n when X¹ is an aluminum atom,
and (c) 0.02 to 0.5 parts by mass of a hindered amine compound.

### Effect of the invention:

The invention provides a substrate excellent in weatherability and adhesion to a coating.

### EMBODIMENTS FOR CARRYING OUT THE INVENTION

The invention will be described in detail.

### (a) Polyolefin resin

The polyolefin resin (a) for use in the invention is not particularly limited. Examples of useful polyolefin resins include α-olefin homopolymers and copolymers, such as polypropylene, isotactic polypropylene, syndiotactic polypropylene, hemi-isotactic polypropylene, stereo-block polypropylene, cyloolefin polymers, polyethylene, low-density polyethylene, linear low-density polyethylene, high-density polyethylene, polybutene-1, poly-3-methylbutene, poly-3-methyl-1-pentene, poly-4-methyl-1-pentene, and ethylene-propylene copolymers. The polyolefin resin (a) may be an olefin elastomer. Polypropylene is particularly preferred as polyolefin resin (a).

For applications demanding shock resistance, such as automotive parts and automotive interior and exterior materials, the polyolefin resin (a) is preferably used in the form of a mixture with a thermoplastic elastomer, rubber, or the like. The polyolefin resin (a) may be alloyed with other resins, be crosslinked by energy ray irradiation, or copolymerized, e.g., with maleic acid in order to acquire any function required of final products or required for molding, processing, or coating operation.

The effect of the invention may vary depending on various factors of the polyolefin resin (a), such as stereoregularity, specific gravity, the catalyst for polymerization, whether or not, or to what degree, the polymerization catalyst has been removed, crystallinity, polymerization conditions such as temperature and pressure, type of crystals, the size of crystal lamellae determined by X-ray small angle scattering, the aspect ratio of crystals, solubility in aromatic or aliphatic solvents, solution viscosity, melt viscosity, average molecular weight, molecular weight distribution, and the number of peaks of the molecular weight distribution curve, and, in the case of copolymers, whether the structure is block or random and the copolymerization ratio of monomers. Be that as it may, the invention is effectively applicable to any resin selected.

In addition to the polyolefin resin (a), the substrate of the invention may contain (a') other resins, including an elastomer. Examples of useful other resins (a') include hydrocarbon resins, hydrogenated hydrocarbon resins (tackifiers), polyacetal resins, aliphatic polyketone resins (ketone resins), polysulfones (e.g., thermoplastic polysulfone, poly(ether sulfone), and poly(4,4'-bisphenol ether sulfone)), polyether ketones, poly(ether ether ketone)s, polyether imides, polyallylates, thermoplastic polyurethane resins (e.g., polymers obtained by the reaction between a diisocyanate compound, such as tolylene diisocyanate, and a glycol and/or a diamine and polyurethane elastomers optionally having a segment such as polytetramethylene glycol), thermoplastic polyimides, polyoxybenzylenes, epoxy resins, and thermoplastic elastomers.

The thermoplastic elastomers (TPEs) referred to above are polymers that exhibit the properties of a rubbery elastic solid (elastomer) at ambient temperature but plasticize (fluidize) at high temperatures to be processed like plastics. TPEs include block polymer TPEs consisting of hard segments (plastic component) and soft segments (elastic component) alternately linking together by chemical bonds on a molecular scale and blend TPEs having a sea/island or polymer alloy structure obtained by physically blending hard segments and soft segments.

The block polymer TPEs are exemplified by ethylene-α-olefm copolymers. Examples of the α-olefin include those having 3 to 10 carbon atoms, such as propylene, 1-butene, 1-pentene, 3-methyl-1-butene, 1-hexene, 1-decene, 3-methyl-1-pentene, 4-methyl-1-pentene, and 1-octene. These α-olefins may be used either singly or in combination of two or more thereof.

The block polymer TPEs may contain segments of a monomer other than ethylene and α-olefins. Examples of the other monomer include non-conjugated dienes having 5 to 15 carbon atoms, such as dicyclopentadiene, 5-ethylidene-2-norbornene, 1,4-hexadiene, and 1,5-dicyclooctadiene; vinyl ester compounds, such as vinyl acetate; ethylenically unsaturated carboxylic ester compounds, such as methyl methacrylate, ethyl methacrylate, methyl acrylate, ethyl acrylate, and butyl acrylate; and vinylnitrile compounds, such as acrylonitrile and methacrylonitrile. These other monomers may be used either individually or in combination of two or more thereof, or may be (co)polymerized.

The blend TPEs are exemplified by those having a polyolefin resin as hard segments and an olefin copolymer elastomer as soft segments.

Examples of the polyolefin resin as a hard segment include low-density polyethylene, high-density polyethylene, linear high-density polyethylene, linear low-density polyethylene, branched low-density polyethylene, ethylene homopolymers, propylene homopolymers, and ethylene-α-olefm copolymers. Examples of the α-olefin include those having 3 to 10 carbon atoms, such as propylene, 1-butene, 1-pentene, 1-hexane, 4-methyl-1-pentene, 1-heptene, 1-octene, and 1-butene. The polyolefin resins as a hard segment may be used either individually or in combination of two or more thereof.

The olefin copolymer elastomer as a soft segment is preferably an ethylene-α-olefm copolymer elastomer. Examples of the α-olefin include those having 3 to 10 carbon atoms, such as propylene, 1-butene, 1-pentene, 3-methyl-1-butene, 1-hexene, 1-decene, 3-methyl-1-pentene, 4-methyl-1-pentene, and 1-octene. These α-olefins may be used either individually or in combination of two or more thereof.

The soft segments may include other elastomers in addition to the olefin copolymer elastomer as long as the effect of the invention is not impaired. Other useful elastomers are exemplified by elastic polymers, including styrene elastomers, such as polybutadiene, hydrogenated polybutadiene, and hydrogenated polyisopyrene; polyvinyl chloride elastomers; polyester elastomers, such as polyethers; polyurethane elastomers; nylon elastomers; and natural rubber.

When the substrate of the invention contains (a') the resin other (e.g., elastomers) than the polyolefin resin (a), the total amount of the other resins to be incorporated is preferably not more than 50 parts by mass per 100 parts by mass of the polyolefin resin (a).

### (b) Aromatic phosphoric ester metal salt

The aromatic phosphoric ester metal salt (b) for use in the invention is represented by general formula (1): 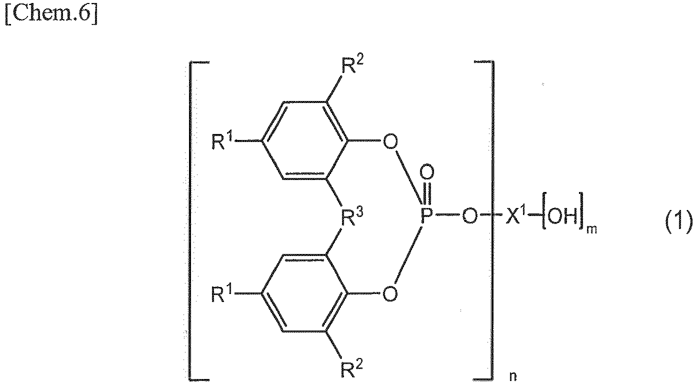 wherein R¹ represents a hydrogen atom or an alkyl group having 1 to 8 carbon atoms; R² represents an alkyl group having 1 to 8 carbon atoms; R³ represents an alkylidene group having 1 to 4 carbon atoms; X¹ represents an alkali metal atom, an alkaline earth metal atom, a zinc atom, or an aluminum atom; n is 1, and m is 0 when X¹ is an alkali metal atom; n is 2, and m is 0 when X¹ is an alkaline earth metal atom or a zinc atom; and n is 1 or 2, and m is 3 - n when X¹ is an aluminum atom,
and (c) 0.02 to 0.5 parts by mass of a hindered amine compound.

Examples of the C1-C8 alkyl as represented by R¹ and R² in general formula (1) include methyl, ethyl, propyl, isopropyl, butyl, sec-butyl, tert-butyl, isobutyl, amyl, tert-amyl, hexyl, heptyl, octyl, isooctyl, tert-octyl, and 2-ethylhexyl. R¹ and R² are each preferably tert-butyl.

Examples of the C1-C4 alkylidene as represented by R³ in general formula (1) include methylidene, ethylidene, propylidene, and butylidene.

Examples of the alkali metal atom as represented by X¹ in general formula (1) include lithium, sodium, and potassium. Sodium or lithium is preferred.

Examples of the alkaline earth metal atom as represented by X¹ in general formula (1) include berylium, magnesium, calcium, strontium, barium, and radium. Calcium or magnesium is preferred.

Specific examples of the aromatic phosphoric ester metal salt of general formula (1) include, but are not limited to, compounds N-1 through N-6 shown below.

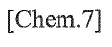

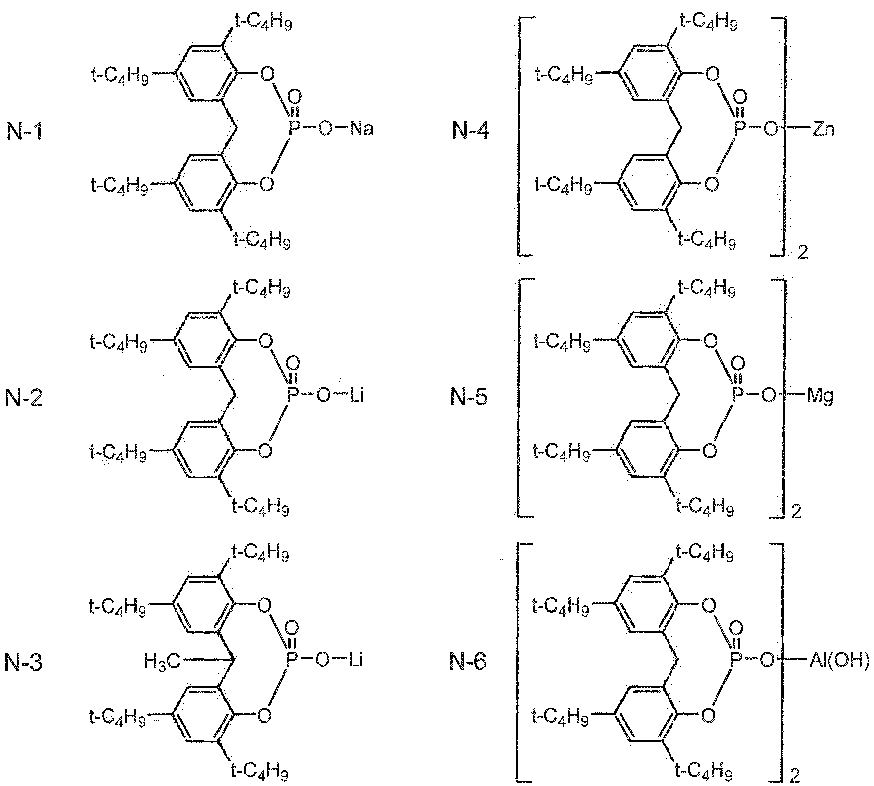

The content of the aromatic phosphoric ester metal salt (b) in the substrate of the invention is 0.01 to 0.5 parts, preferably 0.05 to 0.5 parts, by mass per 100 parts by mass of the polyolefin resin (a). Less than 0.01 parts by mass of the component (b) may be insufficient to produce the effect of the invention. More than 0.5 parts of the component (b) has poor dispersibility in resins and can adversely affect the appearance or physical properties of molded articles.

### (c) Hindered amine compound

Examples of the hindered amine compound (c) include 2,2,6,6-tetramethyl-4-piperidyl stearate, 1,2,2,6,6-pentamethyl-4-piperidyl stearate, 2,2,6,6-tetramethyl-4-piperidyl benzoate, bis(2,2,6,6-tetramethyl-4-piperidyl) sebacate, tetrakis(2,2,6,6-tetramethyl-4-piperidyl) 1,2,3,4-butanetetracarboxylate, tetrakis(1 ,2,2,6,6-pentamethyl-4-piperidyl) 1,2,3 ,4-butanetetracarboxylate, bis(2,2,6,6-tetramethyl-4-piperidyl) di(tridecyl) 1,2,3,4-butanetetracarboxylate, bis(1,2,2,6,6-pentamethyl-4-piperidyl) di(tridecyl) 1,2,3,4-butanetetracarboxylate, bis(1,2,2,4,4-pentamethyl-4-piperidyl) 2-butyl-2-(3,5-di-t-butyl-4-hydroxybenzyl)malonate, a 1-(2-hydroxyethyl)-2,2,6,6-tetramethyl-4-piperidinol/diethyl succinate polycondensate, a 1,6-bis(2,2,6,6-tetramethyl-4-piperidylamino)hexane/2,4-dichloro-6-morpholino-s-triazi ne polycondensate, a 1,6-bis(2,2,6,6-tetramethyl-4-piperidylamino)hexane/2,4-dichloro-6-tert-octylamino-s-tr iazine polycondensate, 1,5,8,12-tetrakis[2,4-bis(N-butyl-N-(2,2,6,6-tetramethyl-4-piperidyl)amino)-s-triazin-6-yl]-1,5,8,12-tetraazadodecane, 1,5,8,12-tetrakis[2,4-bis(N-butyl-N-(1,2,2,6,6-pentamethyl-4-piperidyl)amino)-s-triazin -6-yl]-1,5,8,12-tetraazadodecane, 1,6,11-tris[2,4-bis(N-butyl-N-(2,2,6,6-tetramethyl-4-piperidyl)amino)-s-triazin-6-yl]ami noundecane, 1,6,11-tris[2,4-bis(N-butyl-N-(1,2,2,6,6-pentamethyl-4-piperidyl)amino)-s-triazin-6-yl]a minoundecane, bis{4-(1-octyloxy-2,2,6,6-tetramethyl)piperidyl} decanedionate, and bis {4-(2,2,6,6-tetramethyl-1-undecyloxy)piperidyl) carbonate.

It is preferred to use a compound represented by general formula (2) shown below as the hindered amine compound (c). 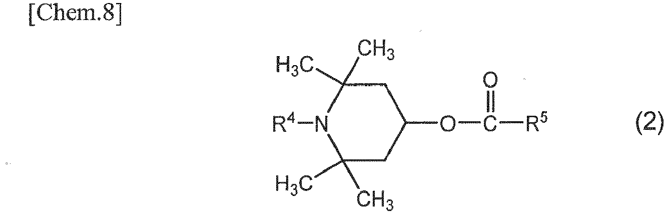 wherein R⁴ represents a hydrogen atom, a hydroxyl group, an alkyl group, a hydroxyalkyl group, an alkoxy group, a hydroxyalkoxy group, or an oxy radical, the alkyl, hydroxyalkyl, alkoxy, and hydroxyalkoxy groups having 1 to 30 carbon atoms; and R⁵ represents an alkyl group having 7 to 31 carbon atoms, an alkenyl group having 2 to 31 carbon atoms, or a substituent represented by general formula (3): 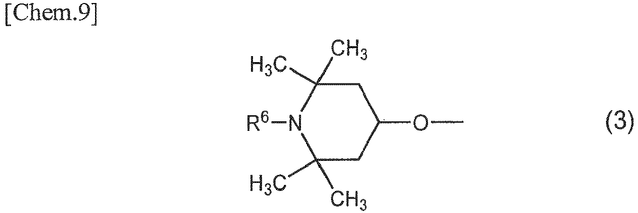 wherein R⁶ has the same meaning as R⁴ in general formula (2).

The hindered amine compound having general formula (2) is obtained by the reaction between a 2,2,6,6-tetramethylpiperidinol and a carbonic acid ester.

Examples of the C1-C30 alkyl as represented by R⁴ in general formula (2) include those recited above and, in addition, cyclohexyl, heptyl, octyl, isooctyl, 2-ethylhexyl, tert-octyl, nonyl, isononyl, decyl, undecyl, dodecyl, tridecyl, tetradecyl, pentadecyl, hexadecyl, heptadecyl, and octadecyl.

Examples of the C1-C30 hydroxyalkyl as represented by R⁴ in general formula (2) include those derived from the above recited alkyl groups, such as hydroxyethyl, 2-hydroxypropyl, and 3-hydroxypropyl.

Examples of the C1-C30 alkoxy as represented by R⁴ in general formula (2) include those derived from the above recited alkyl groups, such as methoxy, ethoxy, propoxy, isopropoxy, butoxy, cyclohexyloxy, octyloxy, 2-ethylhexyloxy, and undecanyloxy.

Examples of the C1-C30 hydroxyalkoxy as represented by R⁴ in general formula (2) include those derived from the above recited alkoxy groups, such as hydroxyethoxy, 2-hydroxypropoxy, 3-hydroxypropoxy, 4-hydroxybutoxy, 2-hydroxy-2-methylpropoxy, and 6-hydroxyhexyloxy.

Examples of the C7-C31 alkyl as represented by R⁵ in general formula (2) include heptyl, octyl, isooctyl, 2-ethylhexyl, tert-octyl, nonyl, isononyl, decyl, undecyl, dodecyl, tridecyl, tetradecyl, pentadecyl, hexadecyl, heptadecyl, and octadecyl.

Examples of the C2-C31 alkenyl as represented by R⁵ in general formula (2) include vinyl, propenyl, butenyl, hexenyl, and oleyl. The position of the double bond may be the α-position, the ω-position, or any position therebetween.

Specific examples of the compound represented by general formula (2) include, but are not limited to, compounds designated HALS-1 through HALS-8 shown below. HALS-6 is a mixture of hindered amine compounds of general formula (2) wherein R⁴ is hydrogen, and R⁵ is C15-C17 alkyl. HALS-7 is a mixture of hindered amine compounds of general formula (2) wherein R⁴ is methyl, and R⁵ is C13-C19 alkyl.

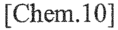

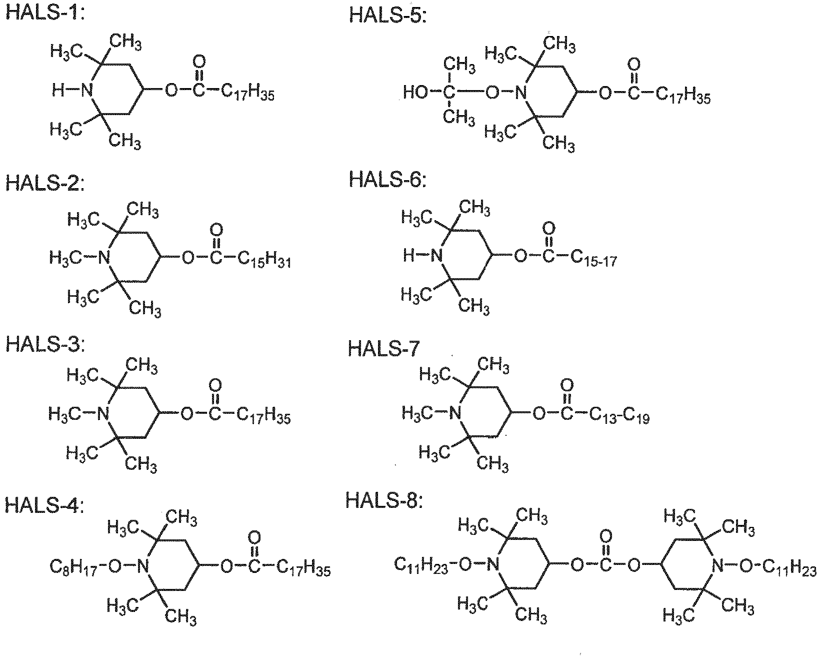

Of the compounds having general formula (2) preferred are those in which R⁴ is methyl, and R⁵ is C13-C19 alkyl.

The compound of general formula (2) can be prepared by any process using techniques common in organic syntheses. For example, the compound of formula (2) may be obtained by a direct esterification reaction between an acid and an alcohol, a reaction between an acid halide and an alcohol, or an interesterification reaction. The resulting reaction product may be purified by an appropriately selected method, such as distillation, recrystallization, filtration, or adsorption.

The content of the hindered amine compound (c) in the substrate of the invention is 0.02 to 0.5 parts, preferably 0.1 to 0.3 parts, by mass per 100 parts by mass of the polyolefin resin (a). At a content less than 0.02 parts by mass, the hindered amine compound (c) has good resistance to leaching from the resin or a molded article, but the molded article has insufficient weatherability and easily deteriorates by oxidation. At a content more than 0.5 parts, the hindered amine compound (c) is liable to bleed or bloom, failing to accomplish the object of the invention.

### (d) Benzoate light stabilizer

The benzoate light stabilizer (d) that may be used in the invention is represented by general formula (4): 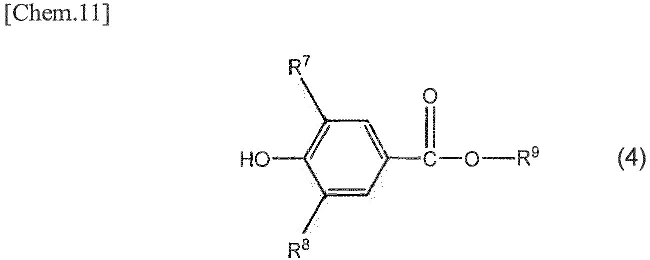 wherein R⁷ and R⁸ each independently represent a hydrogen atom, an alkyl group having 1 to 12 carbon atoms, or an arylalkyl group having 7 to 30 carbon atoms; and R⁹ represents an alkyl group having 8 to 30 carbon atoms.

Examples of the C1-C12 alkyl as represented by R⁷ and R⁸ in general formula (4) include methyl, ethyl, propyl, isopropyl, butyl, sec-butyl, tert-butyl, pentyl, hexyl, octyl, and cycloalkyls (e.g., cyclopentyl and cyclohexyl).

Examples of the C7-C30 arylakyl as represented by R⁷ and R⁸ in general formula (4) include benzyl, phenyl ethyl, and 1-methyl-1-phenylethyl.

Examples of the C8-C30 alkyl as represented by R⁹ in general formula (4) include octyl, nonyl, decyl, undecyl, dodecyl, tridecyl, tetradecyl, pentadecyl, hexadecyl, and octadecyl.

Specific examples of the benzoate light stabilizer having general formula (4) include, but are not limited to, compounds designated LS-1 to LS-4 shown below.

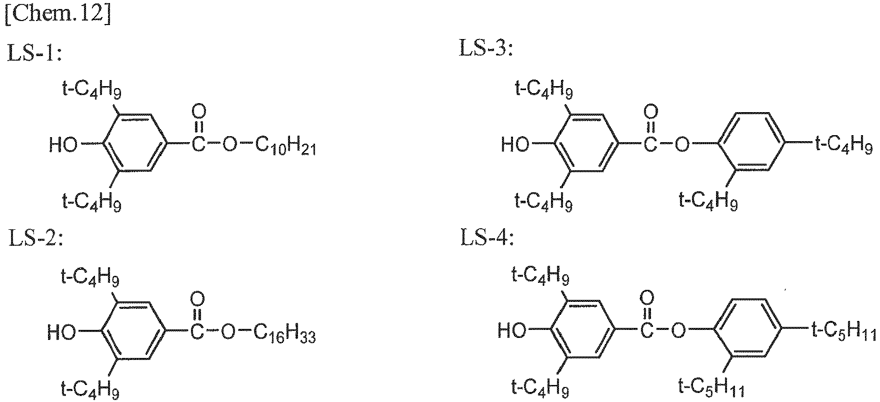

Preferred of the compounds of general formula (4) are those in which R⁷ and R⁸ are each tert-butyl, and R⁹ is -C₁₆H₃₃.

The compound of general formula (4) can be prepared by any process using techniques common in organic syntheses. For example, the compound of formula (4) may be obtained by a direct esterification reaction between an acid and an alcohol, a reaction between an acid halide and an alcohol, or an interesterification reaction. The resulting reaction product may be purified by an appropriately selected method, such as distillation, recrystallization, reprecipitation, filtration, or adsorption using an adsorbent.

The amount of the benzoate light stabilizer (d) when used in the substrate of the invention is preferably 0.02 to 0.5 parts, more preferably 0.05 to 0.15 parts, by mass per 100 parts by mass of the polyolefin resin (a). At amounts less than 0.02 parts, the expected effect of the combined use with the hindered amine compound (a) may not be obtained. At amounts more than 0.5 parts, bleeding or blooming can occur.

Where needed, the coating composition of the invention may contain resins or rubbers other than the polyolefin resin (a) and the elastomer (a') and other additives commonly added to polyolefin resins as long as no adverse influences are exerted on the substrate to be coated.

The total amount of the resins or rubbers other than the polyolefin resin (a) and the elastomer (a'), if used in the substrate of the invention, is preferably not more than 50 parts by mass per 100 parts by mass of the polyolefin resin (a). The total amount of the additives other than the additives (b) to (d), if used, is preferably not more than 3.0 parts by mass per 100 parts by mass of the polyolefin resin (a).

Examples of the other resins include ethylene-vinyl acetate copolymers (EVAs), ethylene-ethyl acrylate copolymers, polyamides, poly(4-methyl-1-pentene), styrene-isoprene-styrene block copolymers, styrene-ethylenebutene-styrene block copolymers, styrene-ethylenepropylene-styrene block copolymers, and styrene-butadiene-styrene block copolymers.

Examples of the rubbers include, but are not limited to, amorphous, random elastic copolymers containing a repeating unit derived from an olefin in a proportion of at least 50% of the total polymer components. The elastic copolymers are exemplified by those obtained by copolymerizing two or more monomers selected from the group consisting of ethylene and α-olefins having 3 to 10 carbon atoms. The two or more monomers selected from the group consisting of ethylene and α-olefins having 3 to 10 carbon atoms may be copolymerized with a conjugated diene monomer and/or a non-conjugated diene monomer.

Examples of the C3-C10 α-olefins are propylene, 1-butene, 1-pentene, 3-methyl-1-butene, 1-hexane, 1-decene, 3-methyl-1-pentene, 4-methyl-1-pentene, and 1-octene.

Examples of the conjugated diene are butadiene, isoprene, and chloroprene.

Examples of the non-conjugated diene monomer include dicyclopentadiene, 1,4-hexadiene, 1,5-cyclooctadiene, 5-methylene-2-norbornene, and 5-ethylidene-2-norbornene.

Examples of the other additives include phenol antioxidants, phosphorus antioxidants, thioether antioxidants, UV absorbers, heavy metal deactivators, nucleating agents, flame retardants, metal soaps (aliphatic carboxylic acid metal salts), fillers, lubricants, antistatics, pigments, dyes, viscosity modifiers, crosslinking agents, crosslinking aids, compatibilizers, fluorescent whitening agents, biocides/antibacterials, and plasticizers.

It should be noted that the substrate intended for use as a transparent material must not contain light-scattering particles, such as pigments and fillers.

Examples of the phenol antioxidants include 2,6-di-t-butyl-4-ethylphenol, 2-t-butyl-4,6-dimethylphenol, styrenated phenol, 2,2'-methylenebis(4-ethyl-6-t-butylphenol), 2,2'-thiobis(6-t-butyl-4-methylphenol), 2,2'-thiodiethylenebis[3-(3,5-di-t-butyl-4-hydroxyphenyl)propionate], 2-methyl-4,6-bis(octylsulfanylmethyl)phenol, 2,2'-isobutylidenebis(4,6-dimethylphenol), isooctyl-3-(3,5-di-t-butyl-4-hydroxyphenyl)propionate, N,N'-hexane-1,6-diylbis[3-(3,5-di-t-butyl-4-hydroxyphenyl)propionamide, 2,2'-oxamidebis[ethyl-3-(3,5-di-t-butyl-4-hydroxyphenyl)propionate], 2-ethylhexyl-3-(3',5'-di-t-butyl-4'-hydroxyphenyl)propionate, 2,2'-ethylenebis(4,6-di-t-butylphenol), 3,5-bis(1,1-dimethylethyl)-4-hydroxybenzene propanoic acid C13-15 alkyl esters, 2,5-di-t-amylhydroquinone, hindered phenol polymer (AO.OH998, manufactured by ADEKA Palmarole SAS), 2,2'-methylenebis[6-(1-methylcyclohexyl)-p-cresol], 2-t-butyl-6-(3-t-butyl-2-hydroxy-5-methylbenzyl)-4-methylphenyl acrylate, 2-[1-(2-hydroxy-3,5-di-t-pentylphenyl)ethyl]-4,6-di-t-pentylphenyl acrylate, 6-[3-(3-t-butyl-4-hydroxy-5-methyl)propoxy]-2,4,8,10-tetra-t-butylbenzo[d,f][1,3,2]-dio xaphosphepin, hexamethylenebis[3-(3,5-di-t-butyl-4-hydroxyphenyl)propionate], calcium bis[monoethyl(3,5-di-t-butyl-4-hydroxybenzyl)phosphonate], a reaction product between 5,7-bis(1,1-dimethylethyl)-3-hydroxy-2(3H)-benzofuranone and o-xylene, 2,6-di-t-butyl-4-(4,6-bis(octylthio)-1,3,5-triazin-2-ylamino)phenol, DL-α-tocopherol (vitamin E), 2,6-bis(α-methylbenzyl)-4-methylphenol, bis[3,3-bis(4'-hydroxy-3'-t-butylphenyl)butanoic acid] glycol ester, 2,6-di-t-butyl-p-cresol, 2,6-diphenyl-4-octadecyloxyphenol, stearyl (3,5-di-t-butyl-4-hydroxyphenyl)propionate, distearyl(3,5-di-t-butyl-4-hydroxybenzyl) phosphonate, tridecyl 3,5-di-t-butyl-4-hydroxybenzylthioacetate, thiodiethylenebis[(3,5-di-t-butyl-4-hydroxyphenyl)propionate], 4,4'-thiobis(6-t-butyl-m-cresol), 2-octylthio-4,6-di(3,5-di-t-butyl-4-hydroxyphenoxy)-s-triazine, 2,2'-methylenebis(4-methyl-6-t-butylphenol), bis[3,3-bis(4-hydroxy-3-t-butylphenyl)butyric acid] glycol ester, 4,4'-butylidenebis(2,6-di-t-butylphenol), 4,4'-butylidenebis(6-t-butyl-3-methylphenol), 2,2'-ethylidenebis(4,6-di-t-butylphenol), 1,1,3-tris(2-methyl-4-hydroxy-5-t-butylphenyl)butane, bis[2-t-butyl-4-methyl-6-(2-hydroxy-3-t-butyl-5-methylbenzyl)phenyl] terephthalate, 1,3,5-tris(2,6-dimethyl-3-hydroxy-4-t-butylbenzyl) isocyanurate, 1,3,5-tris(3,5-di-t-butyl-4-hydroxybenzyl) isocyanurate, 1,3,5-tris(3,5-di-t-butyl-4-hydroxybenzyl)-2,4,6-trimethylbenzene, 1,3,5-tris[(3,5-di-t-butyl-4-hydroxyphenyl)propionyloxyethyl] isocyanurate, tetrakis[methylene-3-(3',5'-di-t-butyl-4'-hydroxyphenyl)propionate]methane, 2-t-butyl-4-methyl-6-(2-acryloyloxy-3-t-butyl-5-methylbenzyl)phenol, 3,9-bis[2-(3-t-butyl-4-hydroxy-5-methylhydrocinnamoyloxy)-1,1-dimethylethyl]-2,4,8, 10-tetraoxaspiro[5.5]undecane, triethylene glycol bis[(3-(3-t-butyl-4-hydroxy-5-methylphenyl)propionate], stearyl-3-(3,5-di-tert-butyl-4-hydroxyphenyl)propionamide, palmityl-3-(3,5-di-tert-butyl-4-hydroxyphenyl)propionamide, myristyl-3-(3,5-di-tert-butyl-4-hydroxyphenyl)propionamide, and lauryl-3-(3,5-di-tert-butyl-4-hydroxyphenyl)propionamide.

Examples of the phosphorus antioxidants include triphenyl phosphite, trisnonylphenyl phosphite, tris(2,4-di-t-butylphenyl) phosphite, tris(2,4-di-t-butyl-5-methylphenyl) phosphite, tris[2-t-butyl-4-(3-t-butyl-4-hydroxy-5-methylphenylthio)-5-methylphenyl] phosphite, tridecyl phosphite, octyldiphenyl phosphite, di(decyl) monophenyl phosphite, di(tridecyl) pentaerythritol diphosphite, di(nonylphenyl) pentaerythritol diphosphite, bis(2,4-di-t-butylphenyl) pentaerythritol diphosphite, bis(2,6-di-t-butyl-4-methylphenyl) pentaerythritol diphosphite, bis(2,4,6-tri-t-butylphenyl) pentaerythritol diphosphite, bis(2,4-dicumylphenyl) pentaerythritol diphosphite, tetra(tridecyl)isopropylidenediphenol diphosphite, tetra(tridecyl)-4,4'-n-butylidenebis(2-t-butyl-5-methylphenol) diphosphite, hexa(tridecyl)-1,1,3-tris(2-methyl-4-hydroxy-5-t-butylphenyl)butane triphosphite, tetrakis(2,4-di-t-butylphenyl)biphenylene diphosphonite, 9,10-dihydro-9-oxa-10-phosphaphenanthrene 10-oxide, 2,2'-methylenebis(4,6-di-t-butylphenyl)-2-ethylhexyl phosphite, 2,2'-methylenebis(4,6-di-t-butylphenyl)octadecyl phosphite, 2,2'-ethylidenebis(4,6-di-t-butylphenyl) fluorophosphite, tris(2-[(2,4,8,10-tetrakis-t-butyldibenzo[d,f][1,3,2]dioxaphosphepin-6-yl)oxy]ethyl)ami ne, and 2-ethyl-2-butylpropylene glycol 2,4,6-tri-t-butylphenol phosphite.

Examples of the thioether antioxidants include tetrakis[methylene-3-(laurylthio)propionate]methane, bis(methyl-4-[3-n-alkyl(C12/C14)thiopropionyloxy]-5-t-butylphenyl) sulfide, ditridecyl 3,3'-thiodipropionate, dilauryl 3,3'-thiodipropionate, dimyristyl 3,3'-thiodipropionate, distearyl 3,3'-thiodipropionate, lauryl/stearyl thiodipropionate, 4,4'-thiobis(6-t-butyl-m-cresol), 2,2'-thiobis(6-t-butyl-p-cresol), and distearyl disulfide.

Examples of the UV absorbers include benzotriazole compounds, triazine compounds, benzophenone compounds, benzoate compounds, cyanoacrylate compounds, salicylate compounds, oxazolinide compounds, and others.

Examples of the benzotriazole compounds include 2-(2-hydroxy-5-t-octylphenyl)benzotriazole, 2-(2-hydroxy-3,5-di-t-butylphenyl)-5-chlorobenzotriazole, 2-(2'-hydroxy)-3'-t-butyl-5'-methylphenyl))-5-chlorobenzotriazole, 2-(2-hydroxy-3-dodecyl-5-methylphenyl)benzotriazole, 2-(2-hydroxy-3 -di-t-butyl-C7-C9 mixed alkoxycarbonylethylphenyl)benzotriazole, 2-(2'-hydroxy-3',5'-dicumylphenyl)benzotriazole, 2,2'-methylenebis(6-(2H-benzotriazol-2-yl)-4-(1,1,3,3-tetramethylbutyl)phenol), 2-(2'-hydroxy-5'-t-butylphenyl)benzotriazole, 2-(2'-hydroxy-3',5'-di-t-butylphenyl)benzotriazole, 2-(2-hydroxy-3-s-butyl-5-t-butylphenyl)benzotriazole, 2-(2'-hydroxy-5'-methylphenyl)benzotriazole, 2-(2'-hydroxy-3 ',5'-di-t-butylphenyl)benzotriazole, octyl 3-(2H-benzotriazoyl)-5-t-butyl-4-hydroxybenzenepropanoate, 2-[2-hyhdroxy-3-(3,4,5,6-tetrahydrophthalimidemethyl)-5-methylphenyl]benzotriazole, and 2-(2-hydroxy-3-t-butyl-5-carboxyphenyl)benzotriazole polyethylene glycol ester.

Examples of the triazine compounds include 2-[4,6-bis(2,4-dimethylphenyl)-1,3,5-triazin-2-yl]-5-(octyloxy)-phenol, 2,4-bis(2,4-dimethylphenyl)-6-(2-hydroxy-4-isooctylphenyl)-1,3,5-triazine, 2-(4,6-diphenyl-1,3,5-triazin-2-yl)-5-[2-(2-ethylhexanoyloxy)ethoxy]phenol, 1,6-hexadiene/N,N'-bis(2,2,6,6-tetramethyl-4-piperidinyl)/2,4-dichloro-6-(4-morpholiny 1)-1,3,5-triazine copolymers, 2-(4,6-bis(2,4-dimethylphenyl)-1,3,5-triazin-2-yl)-5-octyloxyphenol, 2-(4,6-diphenyl-1,3,5-triazin-2-yl)-5-hexyloxyphenol, 2-[4-[(2-hydroxy-3-(2'-ethyl)hexyl)oxy]-2-hydroxyphenyl]-4,6-bis(2,4-dimethylphenyl) -1,3,5-triazine, 2-[4-[2-hydroxy-3-dodecyloxypropyl]oxy]-2-hydroxyphenyl]-4,6-bis(2,4-dimethylphen yl)-1,3,5-triazine, and a polycondensate of 2-[4-[(2-hydroxy-3-tridecyloxypropyl)oxy]-2-hydroxyphenyl]-4,6-bis(2,4-dimethylphen yl)-1,3,5-triazine.

Examples of the benzophenone compounds include 2,4-dihydroxybenzophenone, 2,2'-dihydroxy-4-methoxybenzophenone, 2,2'-dihydroxy-4,4'-dimethoxybenzophenone, 2-hydroxy-4-methoxybenzophenone, 2-hydroxy-4-n-octoxybenzophenone, 2-hydroxy-4-n-dodecyloxybenzophenone, 2,2',4,4'-tetrahydroxybenzophenone, 4-benzoyloxy-2-hydroxybenzophenone, methylene[bis(hydroxymethoxyphenylene)]bis(phenyl)ketone, 1,4-bis(4-bis(4-benzoyl-3-hydroxyphenoxy)butane, poly-[4-(2-acryloxyethoxy)-2-hydroxybenzophenone], 2-hydroxy-4-methoxybenzophenone-5-sulfonic acid, 2-hydroxy-4-methoxybenzophenone-5-sulfonic acid trihydrate, disodium 2,2'-dihydroxy-4,4'-dimethoxy-5,5'-disulfobenzophenone, 2-hydroxy-4-t-butyl-4'-(2-methacryloyloxyethoxyethoxy)benzophenone, and 5,5'-methylenebis(2-hydroxy-4-methoxybenzophenone).

Examples of the benzoates compounds include phenyl salicylate, resorcinol monobenzoate, 2,4-di-t-butylphenyl 3,5-di-t-butyl-4-hydroxybenzoate, octyl 3,5-di-t-butyl-4-hydroxybenzoate, dodecyl 3,5-di-t-butyl-4-hydroxybenzoate, tetradecyl 3,5-di-t-butyl-4-hydroxybenzoate, hexadecyl 3,5-di-t-butyl-4-hydroxybenzoate, octadecyl 3,5-di-t-butyl-4-hydroxybenzoate, and behenyl 3,5-di-t-butyl-4-hydroxybenzoate.

Examples of the cyanoacrylate compounds include 1,3-bis[(2'-cyano-3',3'-diphenylacryloyl)oxy]-2,2-bis{[(2'-cyano-3',3'-diphenylacryloyl) oxy]methyl}propane, ethyl 2-cyano-3,3'-diphenylacrylate, methyl 2-cyano-3-methyl-3-(p-methoxyphenyl)acrylate, and 2-ethylhexyl 2-cyano-3,3 -diphenylacrylate.

Examples of the salicylate compounds are phenyl salicylate and 4-t-butylphenyl salicylate.

Examples of the oxalinide compounds are 2-ethyl-2'-ethoxyoxanilide and 2-ethoxy-4'-dodecyloxanilide.

Examples of the other UV absorbers include N-(4-ethoxycarbonylphenyl)-N'-methyl-N'-phenylformamidine, N-(ethoxycarbonylphenyl)-N'-ethyl-N'-phenylformamidine, tetraethyl 2,2'-(1,4-pheylenedimethylidene)bismalonate, [(4-methoxyphenyl)methylene] dimethyl ester, and 4,4'-hexamethylenebis(1,1-dimethylsemicarbazide).

Examples of the heavy metal deactivators include 1,2,4-triazol-3-yl salicylamide, bis(salicylic acid) hydrazide, dodecanedioyl-bis(2-(2-hydroxybenzoyl)hydrazide), and bis(3-(3,5-di-t-butyl-4-hydroxyphenyl)propionic acid) hydrazide.

Examples of the nucleating agents include metal carboxylates, such as sodium benzoate, aluminum 4-t-butylbenzoate, sodium adipate, and disodium bicyclo[2.2.1]heptane-2,3-dicaboxylate; phosphoric ester metal salts, such as sodium bis(4-t-butylphenyl) phosphate, sodium 2,2'-methylenebis(4,6-di-t-butylphenyl) phosphate, and lithium 2,2'-methylenebis(4,6-di-t-butylphenyl) phosphate; polyhydric alcohol derivatives, such as dibenzylidene sorbitol, bis(methylbenzylidene) sorbitol, bis(p-ethylbenzylidene) sorbitol, and bis(dimethylbenzylidene) sorbitol; and amide compounds, such as N,N',N"-tris[2-methyloyclohexyl]-1,2,3-propanetricarboxamide (RIKACLEAR PC1), N,N',N"-tricyclohexyl-1,3,5-benzenetricarboxamide, N,N'-dicyclohexylnaphthalenedicarboxamide, and 1,3,5-tri(dimethylisopropylamino)benzene.

Examples of the flame retardants include phosphorus flame retardants, metal hydroxides, and bromine flame retardants. Examples of the phosphorus flame retardants include aromatic phosphoric esters, such as triphenyl phosphate, tricresyl phosphate, trixylenyl phosphate, cresyldiphenyl phosphate, cresyl-2,6-dixylenyl phosphate, and resorcinol bis(diphenylphosphate); phosphonic esters, such as divinyl phenylphosphonate, diallyl phenylphosphonate, and (1-butenyl)phenylphosphonate; phosphinic esters, such as phenyl diphenylphosphinate, methyl diphenylphosphinate, and 9,10-dihydro-9-oxa-10-phosphaphenanthrene 10-oxide derivatives; phosphazene compounds, such as bis(2-allylphenoxy)phosphazene and dicresylphosphazene; melamine phosphate, melamine pyrophosphate, melamine polyphosphate, melam polyphosphate, ammonium polyphosphate, phosphorus-containing vinylbenzyl compounds, and red phosphorus. Examples of the metal hydroxides include magnesium hydroxide and aluminum hydroxide. Examples of the bromine flame retardants include brominated bisphenol A epoxy resins, brominated phenol novolak epoxy resins, hexabromobenzene, pentabromotoluene, ethylenebis(pentabromophenyl), ethylenebis(tetrabromophthalimide), 1 ,2-dibromo-4-(1,2-dibromoethyl)cyclohexane, tetrabromocyclooctane, hexabromocyclododecane, bis(tribromophenoxy)ethane, brominated polyphenylene ether, brominated polystyrene, 2,4,6-tris(tribromophenoxy)-1,3,5-triazine, tribromophenylmaleimide, tribromophenyl acrylate, tribromophenyl methacrylate, tetrabromobisphenol A dimethacrylate, pentabromobenzyl acrylate, and brominated styrene.

The metal soaps (aliphatic carboxylic acid metal salts) are exemplified by compounds represented by general formula (5): 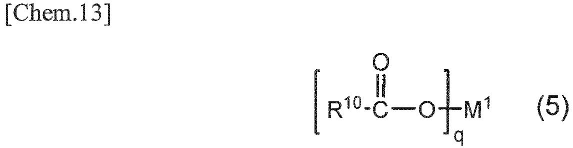 wherein R¹⁰ represents an aliphatic group having 1 to 30 carbon atoms and optionally having a substituent selected from a hydroxyl group and a cycloalkyl group; M¹ represents a metal atom; and q represents the valence of the metal atom M¹, q being an integer from 1 to 4.

Examples of the C1-C30 aliphatic group as represented by R¹⁰ in general formula (5) include hydrocarbon groups, such as alkyl, alkenyl, and alkyl having two or more unsaturated bonds, which are optionally substituted with hydroxyl or cycloalkyl and may have a branched structure.

Specific examples include acetic acid, propionic acid, lactic acid, butyric acid, valeric acid, caproic acid, 2-ethylhexanoic acid, enanthic acid, pelargonic acid, caprylic acid, neodecylic , undecylic acid, lauric acid, tridecylic acid, myristic acid, pentadecylic acid, palmitic acid, margaric acid, stearic acid, nonadecylic acid, arachidic acid, behenic acid, lignoceric acid, cerotic acid, montanoic acid, melissic acid, obtusilic acid, linderic acid, tsuzuic acid, palmitoleic acid, myristoyleic acid, petroselinic acid, oleic acid, elaidic acid, vaccenic acid, linoleic acid, linoelaidic acid, γ-linolenic acid, linolenic acid, ricinoleic acid, naphthenic acid, abietic acid, hydroxyacetic acid, β-hydroxypropionic acid, 2-methyl-β-hydroxypropionic acid, α-hydroxybutyric acid, β-hydroxybutyric acid, γ-hydroxybutyric acid, monomethylolpropionic acid, dimethylolpropionic acid, and 12-hydroxystearic acid. Preferred of them are aliphatic groups having 12 to 22 carbon atoms, with myristic acid, stearic acid, and 12-hydroxystearic acid being particularly preferred.

Examples of the metal atom represented by M¹ in formula (5) include alkali metals, magnesium, calcium, strontium, barium, titanium, manganese, iron, zinc, silicon, zirconium, yttrium, barium, and hafnium. Preferred of them are alkali metals, such as sodium, lithium, and potassium.

Examples of the fillers include talc, mica, calcium carbonate, calcium oxide, calcium hydroxide, magnesium carbonate, magnesium hydroxide, magnesium oxide, magnesium sulfate, aluminum hydroxide, barium sulfate, glass powder, glass fiber, clay, dolomite, silica, alumina, potassium titanate whisker, wollastonite, fibrous magnesium oxysulfate, and hydrotalcite. The filler preferably has an average particle size (in the case of spherical to platy particles) or an average fiber diameter (in the case of needle-like or fibrous particles) of 5 µm or less.

The lubricant is used with a view to imparting lubricity to the surface of molded products so as to protect from scratches. Examples of useful lubricants include unsaturated fatty acid amides, such as oleamide and erucamide, and saturated fatty acid amides, such as behenamide and stearamide. These lubricants may be used either alone or in combination of two or more thereof.

The antistatic is used with a view to preventing the buildup of static electricity or preventing dust attraction due to static electric charges. A variety of antistatics are available, including cationic, anionic, and nonionic antistatics. Examples of preferred antistatics include polyoxyethylene alkylamines, polyoxyethylene alkylamides, and their fatty acid esters, and glycerol fatty acid esters. The antistatics may be used either individually or in combination of two or more thereof. The amount of the antistatic to be added is preferably 0.03 to 2 parts, more preferably 0.04 to 1 part, by mass per 100 parts by mass of the polyolefin resin (a). At too small amounts, the antistatic effect may be insufficient. At too large amounts, the antistatic can bleed to the surface or reduce the physical properties of the coated substrate.

Examples of the crosslinking agents include organic peroxides, such as 2,5-dimethyl-2,5-di(t-butylperoxy)hexane, 2,5-dimethyl-2,5-di(t-butylperoxy)hexyne-3, 1,3 -bis(t-butylperoxyisopropyl)benzene, 1,1-di(t-butylperoxy)-3,5,5-trimethylcyclohexane, 2,5-dimethyl-2,5-di(peroxybenzoyl)hexyne-3, and dicumyl peroxide. The organic peroxide may be mixed with a diluent to be used as liquid or powder.

Examples of the diluent include oils, organic solvents, and inorganic fillers (e.g., silica and talc).

The crosslinking aids are exemplified by those chiefly used to increase the degree of crosslinking of crosslinking type TPEs. Those having more than one double bond are preferred, including tetraethylthiuram disulfide (TETD), tetramethylthiuram disulfide (TMTD), N,N'-m-phenylenebismaleimide, toluylenebismaleimide, p-quinone dioxime, nitrobenzene, diphenylguanidine, divinylbenzene, ethylene glycol dimethacrylate, polyethylene glycol dimethacrylate, trimethylolpropane trimethacrylate, and allyl methacrylate. These crosslinking aids may be used either individually or in combination of two or more thereof.

Examples of the softeners include process oils and aliphatic cyclic saturated hydrocarbon resins.

The coating composition to be applied to the substrate of the invention can be prepared using common techniques. For example, a water soluble component, such as a binder, is dissolved in water, and the polyolefin resin (a), the aromatic phosphoric ester metal salt of formula (1) (b), the hindered amine compound (c), and other additives are mixed therein in the respective amounts decided according to the intended use. Any solid components, such as the additives or fillers, are then dispersed therein using, e.g., an ultrasonicator, a turbine stirrer, a homogenizer, a colloid mill, a bead mill, a sand mill, or a high-speed stirrer to make a coating composition.

Coating compositions known for use on automobile materials can be applied to the substrate of the invention. While coating compositions containing an organic solvent as a diluent may be usable, waterborne coating compositions are preferably used from the environmental viewpoint.

The coating composition may contain additives commonly used for the above use, such as brighteners, solid resins, curing agents, phosphorus-containing compounds, surface modifiers, viscosity modifiers, antioxidants, UV inhibitors, defoaming agents, and colorants.

Useful brighteners include materials imparting gloss or optical interference properties to the coating film. Examples of such brighteners include flaky aluminum, deposited aluminum, aluminum oxide, bismuth oxychloride, copper alloys, zinc alloys, nickel alloys, tin alloys, mica, titanium oxide-coated mica, iron oxide-coated mica, and micaceous iron oxide.

Solid resins generally used in coating compositions are useful, including acrylic resins, polyester resins, alkyd resins, urethane resins, epoxy resins, and their modified resins.

Curing agents generally used in coating compositions are useful, including amino resins, blocked isocyanates, epoxy compounds, aziridine compounds, carbodiimide compounds, oxazoline compounds, and metal ions.

The phosphorus-containing compounds include those used to improve the aesthetic quality and wettability of the coating film and to prevent corrosion of the brightener, such as (mono-, di-, or tri-)alkyl phosphates, (mono-, di-, or tri-)alkyl phosphites, (mono-, di-, or tri-)alkenyl phosphates, (mono-, di-, or tri-)alkenyl phosphites, (mono-, di-, or tri-)aryl phosphates, (mono-, di-, or tri-)aryl phosphites, and phosphorus-containing acrylic resins.

Colorants generally used in coating composition are useful, including organic or inorganic coloring pigments and brighteners. Examples of organic pigments include azo chelate pigments, insoluble azo pigments, condensed azo pigments, phthalocyanine pigments, indigo pigments, perinone pigments, perylene pigments, dioxane pigments, quinacridone pigments, isoindolinone pigments, and metal complex pigments. Examples of inorganic pigments include chrome yellow, yellow iron oxide, red iron oxide, carbon black, and titanium dioxide.

The coating composition may be applied directly to the substrate of the invention. Where desired, a base coat may be applied to the substrate, followed by baking, and a clear coating may be applied to the baked base coat, or a clear coating may be applied to an uncured base coat.

If desired, the substrate of the invention may have a surfacer formed by applying a surfacer coating that can contain the above described solid resin, curing agent, organic or inorganic colorants and pigments, and so on.

The substrate of the invention is preferably cleaned by trichloroethane vapor degreasing or cleaned with a neutral detergent. A primer may be applied to the substrate to enable electrostatic coating.

The substrate of the invention is not limited by usage and may have any shape and form, such as film, sheet, cylinder, box, and sphere. Specific typical applications of the substrate include automotive interior and exterior materials the appearance of which is of importance, such as bumpers, spoilers, side guard moldings, and radiator grilles.

Applications of the substrate of the invention are not limited to the automotive interior and exterior materials and include any articles comprising PP resin compositions, such as personal articles, furniture, and containers.

The invention will now be illustrated in greater detail with reference to Examples and Comparative Examples, but it should be understood that the invention is not construed as being limited thereto. Unless otherwise noted, all the parts are by mass.

### Examples 1 and 2 and Comparative Examples 1 and 2

### Making and evaluation of substrate

### Preparation of test panel

Sixty parts of impact polypropylene (MFR: 30 g/10 min) was mixed with 30 parts of a thermoplastic elastomer (Engage 8100, from Dow Chemical Company) and 10 parts of talc (Microace P-4, from Nippon Talc Co., Ltd.). To the mixture (100 parts) were added 0.05 parts of a phenol antioxidant (Adekastab AO-60, from ADEKA Corp.), 0.05 parts of a phosphorus antioxidant (Adekastab 2112, from ADEKA Corp.), 0.05 parts of calcium stearate, 2 parts of carbon black, and the hindered amine compound and the aromatic phosphoric ester metal salt shown in Tables 1 through 4. After mixing, the composition was melt-kneaded and extruded using a twin-screw extruder (TEX-30α, from The Japan Steel Works, Ltd.) at a melting temperature of 230° and a screw rotation speed of 150 rpm to obtain pellets.

The pellets were injection molded using an injection molding machine (Krauss Maffei 150 t) at an injection temperature of 240°C to make 100 mm wide, 150 mm long, and 3 mm thick panels.

Each panel was coated with a waterborne base coating (WB3300-WB (Black), from Lesonal) and then with a solventborne top coating (Clear Coat TC152R, from Beckers).

The coated panel was evaluated as follows.

### (High pressure water jetting test)

The coating film of the panel was scraped off in a straight line along the longitudinal centerline with a width of 0.5 mm and a length of 60 mm until the surface of the substrate was exposed. Another scrape with a width of 0.5 mm and a length of 60 mm was made in the film to cross the first scrape. At least two cross-shaped scrapes (hereinafter simply referred to as cross(es)) were made in different areas per panel, and at least two panels were tested in each run according to the following procedure.
(1) Each panel was inserted into a test piece holder having a 40 mm diameter hole in the center and vertically fixed such that the center of the cross was seen through the hole of the holder.
(2) The holder having the panel was set so that a water jet might be horizontally directed to the cross of the panel.
(3) The water jet nozzle was adjusted so that a jet of water from the nozzle might sweep a distance of 20 mm on the panel surface.
(4) A jet of water was applied to each cross six times under the following conditions.
   Water pressure: 12 ± 0.3 MPa
   Spraying distance: 100 ± 3 mm (measured in the direction perpendicular to the panel surface)
   Water flow: 15 ± 0.3 L/min
   Water temperature: 50° ± 5°C
   Number of sweeps: 30 ± 2 sweeps/30 seconds
   Sweeping width: ± 20 mm from the center of the holder's hole
   Spray nozzle: No. 2506 (flat jet 25°), from Spraying Systems CO.

### (Evaluation)

After every water jet application, the ratio of the flaked coat area to the area of the holder's hole (40 mm diameter) was calculated. A total of six crosses were tested, and the highest flaked area ratio was taken as the result. The results obtained are shown in Tables 1 and 2.

### (Evaluation of humidity resistance)

The adhesion between the coat and the substrate in a humidified condition was evaluated by the following test.

The coated panel was placed in an oven kept at 50 ± 5% RH and subjected to four heating cycles within 24 hours, each cycle consisting of (1) increasing temperature from room temperature (23 ± 5°C) up to 40 ± 3°C over 45 minutes, (2) maintaining the temperature at 40 ± 3°C for 75 minutes, and (3) cooling from 40 ± 3°C to room temperature. After the heating cycles, the panel was subjected to the high pressure water jetting test in the same manner as described above. The results obtained are shown in Tables 3 and 4.

**Table 1**

| | Additives (amount in part by mass) | Humidification | Flaked Area Ratio (%) | | | | | |
|---|---|---|---|---|---|---|---|---|
| | | | #1 | #2 | #3 | #4 | #5 | #6 |
| Example 1-1 | NA-1 (0.1) | no | 0 | 0 | 0 | 0 | 3 | 6 |
| | HALS-6 (0.15) | | | | | | | |
| Example 1-2 | NA-1 (0.1) | no | 0 | 0 | 0 | 0 | 1 | 4 |
| | HALS-6 (0.075) | | | | | | | |
| | LS-2 (0.075) | | | | | | | |
| Example 1-3 | NA-1 (0.1) | no | 0 | 0 | 0 | 0 | 1 | 4 |
| | HALS-6 (0.1) | | | | | | | |
| | LS-2 (0.05) | | | | | | | |
| Example 1-4 | NA-1 (0.1) | no | 0 | 0 | 0 | 0 | 2 | 5 |
| | HALS-7 (0.15) | | | | | | | |
| Example 1-5 | NA-1 (0.1) | no | 0 | 0 | 0 | 0 | 1 | 3 |
| | HALS-7 (0.075) | | | | | | | |
| | LS-2 (0.075) | | | | | | | |
| Example 1-6 | NA-1 (0.1) | no | 0 | 0 | 0 | 0 | 1 | 3 |
| | HALS-7 (0.1) | | | | | | | |
| | LS-2 (0.05) | | | | | | | |
| Example 1-7 | NA-1 (0.1) | no | 0 | 0 | 0 | 0 | 1 | 3 |
| | HALS-7 (0.1125) | | | | | | | |
| | LS-2 (0.0375) | | | | | | | |
| Example 1-8 | NA-1 (0.1) | no | 0 | 0 | 0 | 0 | 3 | 7 |
| | HALS-9 (0.15) | | | | | | | |

| | | | | | | | | |
|---|---|---|---|---|---|---|---|---|
| NA-1: A mixture of N-1 and N-2, which are aromatic phosphoric ester metal salts having general formula (1), and lithium myristate HALS-9: Bis(2,2,6,6-tetramethyl-4-piperidyl) sebacate LS-3: Hexadecyl 3,5-di-t-butyl-4-hydroxybenzoate | | | | | | | | |

**Table 2**

| | Additives (amount in part by mass) | Humidification | Flaked Area Ratio (%) | | | | | |
|---|---|---|---|---|---|---|---|---|
| | | | #1 | #2 | #3 | #4 | #5 | #6 |
| Comp. Example 1-1 | HALS-6 (0.15) | no | 0 | 1 | 1 | 4 | 6 | 55 |
| Comp. Example 1-2 | HALS-1 (0.075) | no | 0 | 0 | 0 | 15 | 18 | 43 |
| | LS-2 (0.075) | | | | | | | |
| Comp. Example 1-3 | HALS-6 (0.1) | no | 0 | 0 | 0 | 13 | 15 | 21 |
| | LS-2 (0.05) | | | | | | | |
| Comp. Example 1-4 | HALS-7 (0.15) | no | 0 | 0 | 1 | 7 | 38 | 51 |
| Comp. Example 1-5 | HALS-7 (0.075) | no | 0 | 0 | 1 | 9 | 22 | 35 |
| | LS-2 (0.075) | | | | | | | |
| Comp. Example 1-6 | HALS-7 (0.1) | no | 0 | 0 | 1 | 10 | 15 | 27 |
| | LS-2 (0.05) | | | | | | | |
| Comp. Example 1-7 | HALS-7 (0.1125) | no | 0 | 1 | 5 | 9 | 12 | 25 |
| | LS-2 (0.0375) | | | | | | | |
| Comp. Example 1-8 | HALS-9 (0.15) | no | 0 | 0 | 2 | 29 | 42 | 58 |

**Table 3**

| | Additives (amount in part by mass) | Humidification | Flaked Area Ratio (%) | | | | | |
|---|---|---|---|---|---|---|---|---|
| | | | #1 | #2 | #3 | #4 | #5 | #6 |
| Example 2-1 | NA-1 (0.1) | yes | 0 | 0 | 0 | 0 | 3 | 6 |
| | HALS-6 (0.15) | | | | | | | |
| Example 2-2 | NA-1 (0.1) | yes | 0 | 0 | 0 | 0 | 2 | 5 |
| | HALS-6 (0.075) | | | | | | | |
| | LS-2 (0.075) | | | | | | | |
| Example 2-3 | NA-1 (0.1) | yes | 0 | 0 | 0 | 0 | 1 | 4 |
| | HALS-6 (0.1) | | | | | | | |
| | LS-2 (0.05) | | | | | | | |
| Example 2-4 | NA-1 (0.1) | yes | 0 | 0 | 0 | 0 | 2 | 4 |
| | HALS-7 (0.15) | | | | | | | |
| Example 2-5 | NA-1 (0.1) | yes | 0 | 0 | 0 | 0 | 2 | 4 |
| | HALS-7 (0.075) | | | | | | | |
| | LS-2 (0.075) | | | | | | | |
| Example 2-6 | NA-1 (0.1) | yes | 0 | 0 | 0 | 0 | 1 | 3 |
| | HALS-7 (0.1) | | | | | | | |
| | LS-2 (0.05) | | | | | | | |
| Example 2-7 | NA-1 (0.1) | yes | 0 | 0 | 0 | 0 | 3 | 5 |
| | HALS-7 (0.1125) | | | | | | | |
| | LS-2 (0.0375) | | | | | | | |
| Example 2-8 | NA-1 (0.1) | yes | 0 | 0 | 0 | 1 | 5 | 8 |
| | HALS-9 (0.15) | | | | | | | |

**Table 4**

| | Additives (amount in part by mass) | Humidification | Flaked Area Ratio (%) | | | | | |
|---|---|---|---|---|---|---|---|---|
| | | | #1 | #2 | #3 | #4 | #5 | #6 |
| Comp. Example 2-1 | HALS-1 (0.15) | yes | 0 | 3 | 8 | 40 | 45 | 58 |
| Comp. Example 2-2 | HALS-6 (0.075) | yes | 0 | 0 | 0 | 15 | 18 | 43 |
| | LS-2 (0.075) | | | | | | | |
| Comp. Example 2-3 | HALS-6 (0.1) | yes | 0 | 0 | 0 | 15 | 24 | 35 |
| | LS-2 (0.05) | | | | | | | |
| Comp. Example 2-4 | HALS-7 (0.15) | yes | 1 | 2 | 8 | 24 | 37 | 59 |
| Comp. Example 2-5 | HALS-7 (0.075) | yes | 0 | 0 | 1 | 9 | 22 | 35 |
| | LS-2 (0.075) | | | | | | | |
| Comp. Example 2-6 | HALS-7 (0.1) | yes | 0 | 0 | 1 | 10 | 15 | 27 |
| | LS-2 (0.05) | | | | | | | |
| Comp. Example 2-7 | HALS-7 (0.1125) | yes | 0 | 0 | 7 | 12 | 16 | 26 |
| | LS-2 (0.0375) | | | | | | | |
| Comp. Example 2-8 | HALS-9 (0.15) | yes | 0 | 0 | 5 | 33 | 55 | 77 |

It is seen from the results of Comparative Examples 1-1 to 1-8 that the coat on the substrate out of the scope of the invention suffers considerable flaking in high pressure water jet testing, indicating insufficient adhesion between the substrate and the coat. The results of Comparative Examples 2-1 to 2-8 prove that the flaking of the coat occurs easily when the coated panel is exposed to a humidified environment.

In contrast, the substrates of the invention exhibit excellent adhesion to the coating applied thereon as can be seen from the results of Examples 1-1 to 1-8. It was also confirmed from the results of Examples 2-1 to 2-8 that the substrates of the invention undergo only a slight influence of humidification.
It has thus been proved that the substrate of the invention exhibits excellent adhesion to coatings applied thereon and are well suited for use as automotive interior and exterior materials that would be exposed to high humidity environments.

## Claims

1. Use of an aromatic phosphoric ester metal salt represented by general formula (1): 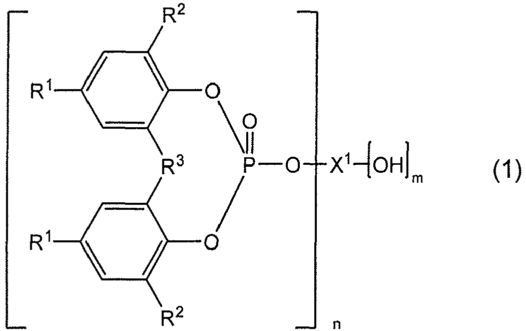 wherein R¹ represents a hydrogen atom or an alkyl group having 1 to 8 carbon atoms; R² represents an alkyl group having 1 to 8 carbon atoms; R³ represents an alkylidene group having 1 to 4 carbon atoms; X¹ represents an alkali metal atom, an alkaline earth metal atom, a zinc atom, or an aluminum atom; n is 1, and m is 0 when X¹ is an alkali metal atom; n is 2, and m is 0 when X¹ is an alkaline earth metal atom or a zinc atom; and n is 1 or 2, and m is 3 - n when X¹ is an aluminum atom, as a coating adhesion promoter in a polyolefin resin composition stabilized with a hindered amine compound to be molded into a substrate.

## Patentansprüche

1. Verwendung eines aromatischen Phosphorsäureester-Metallsalzes der allgemeinen Formel (1): 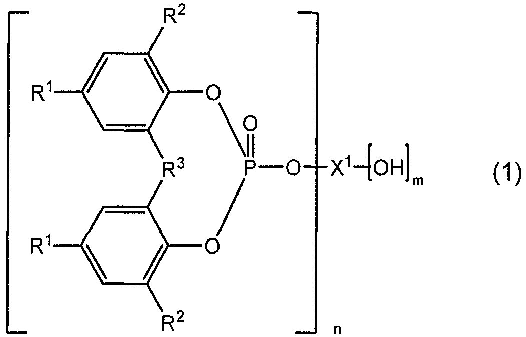 worin R¹ ein Wasserstoffatom oder eine Alkylgruppe mit 1 bis 8 Kohlenstoffatomen darstellt; R² eine Alkylgruppe mit 1 bis 8 Kohlenstoffatomen darstellt; R³ eine Alkylidengruppe mit 1 bis 4 Kohlenstoffatomen darstellt; X¹ ein Alkalimetallatom, ein Erdalkalimetallatom, ein Zinkatom oder ein Aluminiumatom darstellt; n 1 ist und m 0 ist, wenn X¹ ein Alkalimetallatom ist; n 2 ist und m 0 ist, wenn X¹ ein Erdalkalimetallatom oder ein Zinkatom ist; und n 1 oder 2 ist und m 3 - n ist, wenn X¹ ein Aluminiumatom ist, als Bechichtungshaftvermittler in einer mit einer gehinderten Aminverbindung stabilisierten Polyolefinharzzusammensetzung, die zu einem Substrat geformt werden soll.

## Revendications

1. Utilisation d'un sel métallique d'ester phosphorique aromatique représenté par la formule générale (1) : 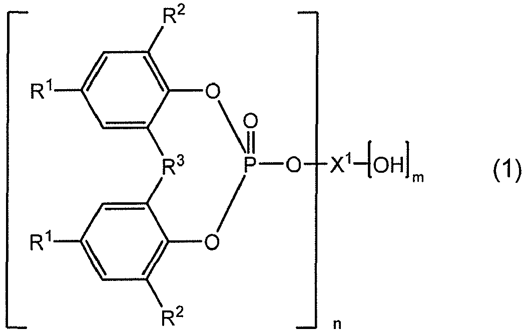
dans laquelle R¹ représente un atome d'hydrogène ou un groupe alkyle ayant 1 à 8 atomes de carbone; R² représente un groupe alkyle ayant 1 à 8 atomes de carbone; R³ représente un groupe alkylidène ayant 1 à 4 atomes de carbone; X¹ représente un atome de métal alcalin, un atome de métal alcalino-terreux, un atome de zinc ou un atome d'aluminium; n vaut 1 et m vaut 0 lorsque X¹ est un atome de métal alcalin; n vaut 2 et m vaut 0 lorsque X¹ est un atome de métal alcalino-terreux ou un atome de zinc; et n vaut 1 ou 2, et m vaut 3 - n lorsque X¹ est un atome d'aluminium,
comme promoteur d'adhérence du revêtment dans une composition de résine polyoléfinique stabilisée avec un composé d'amine encombrée à mouler dans un substrat.
